# FASCICULE DE BREVET EUROPEEN

(11) **EP 4 212 680 B1**
(45) Date de publication et mention de la délivrance du brevet: **11.11.2026**
(21) Numéro de dépôt: 23151541.2
(22) Date de dépôt: 13.01.2023
(51) Int. Cl.: E04B 1/80, E04C 2/16, E04C 2/288, B27N 3/00, B27N 3/04, B32B 21/02, D01G 25/00, E04B 1/78, B32B 5/02, B32B 13/14, D04H 1/58, D04H 1/4266, E04B 1/74

(54) **COUCHE EN MATERIAU ISOLANT, PROCÉDÉ DE FABRICATION DE LA COUCHE EN MATERIAU ISOLANT ET PANNEAU DE CONSTRUCTION COMPRENANT UNE TELLE COUCHE EN MATERIAU ISOLANT**
DÄMMSTOFFSCHICHT, VERFAHREN ZUR HERSTELLUNG DER DÄMMSTOFFSCHICHT UND BAUPLATTE MIT EINER SOLCHEN DÄMMSTOFFSCHICHT
INSULATING LAYER, METHOD FOR PRODUCING THE INSULATING LAYER AND BUILDING PANEL COMPRISING SUCH AN INSULATING LAYER

(30) Priorité: 14.01.2022 FR 2200294
(43) Date de publication de la demande: 19.07.2023
(73) Titulaire: Muance, 13100 Aix-en-Provence (FR)
(72) Inventeur: MORENVAL, Lionel, 13100 Aix-en-Provence (FR)
(74) Mandataire: Fache, Sébastien

(56) Documents cités:
- WO-A1-2008/107664
- CN-B- 106 592 856
- NL-B1- 2 025 313
- US-A1- 2020 283 950
- US-B1- 6 460 224
- KLÍMEK PETR ET AL: "UtilizingMiscanthusstalks as raw material for particleboards", INDUSTRIAL CROPS AND PRODUCTS, ELSEVIER, NL, vol. 111, 6 November 2017 (2017-11-06), pages 270 - 276, XP085303503, ISSN: 0926-6690, DOI: 10.1016/J.INDCROP.2017.10.032

## Description

L'invention s'inscrit dans le domaine de la construction, et porte plus particulièrement sur les matériaux isolants thermiques et les panneaux de construction intégrant un tel matériau isolant.

L'invention porte également sur un procédé de fabrication d'une couche matériau isolant thermique.

Dans le domaine de la construction et du bâtiment, il est bien connu d'intégrer dans les murs de béton et particulièrement dans les panneaux de construction des matériaux isolants thermiques pour éviter les déperditions de chaleur. Ces matériaux se présentent sous forme de couche à section transversale parallélépipédique, et plus généralement à section transversale carrée ou rectangulaire.

Les matériaux utilisés sont généralement à base de pétrole (par exemple le polystyrène expansé) ou d'origine minérale (par exemple la laine de verre).

Néanmoins, ces matériaux présentent des inconvénients inhérents à leur nature. La fabrication des matériaux à base de pétrole est polluante, et ces derniers sont peu recyclables. Quant aux matériaux d'origine minérale, ils demandent une quantité importante d'énergie pour leur fabrication, et sont également peu recyclable. Ainsi, le bilan écologique en termes de cout énergétique et d'impact environnemental est défavorable à ces matériaux.

Pour surmonter ces inconvénients, des matériaux dits « biosourcés », fabriqués à partir de végétaux comme le bois, le coton, le chanvre ou le lin, sont utilisés en tant qu'isolants thermiques. Cependant, leur fabrication est complexe et couteuse car seulement certaines parties des végétaux peuvent être utilisées. Il y a en effet un processus fastidieux de sélection des parties utilisables de la plante.

Il est également connu d'utiliser des plantes graminées, car l'intégralité de la tige de la plante peut être utilisée pour la fabrication de matériaux isolants thermiques.

Cependant, les couches connues en matériau isolant à base de pailles de graminées présentent souvent une tenue mécanique plus faible que les couches fabriquées avec d'autres matériaux biosourcés.

US 2020/283950 A1 divulgue une couche isolante thermique et un procédé de fabrication d'une couche isolante thermique de l'état de la technique.

Pour pallier les différents inconvénients évoqués plus haut, l'invention a pour objet de proposer une couche en matériau isolant à base de pailles de graminées présentant une tenue mécanique améliorée.

À cet effet, l'invention vise une couche isolante thermique réalisé à base de matériau végétal pour un panneau de construction, comprenant des tiges d'au moins une plante graminée sous forme de fractions fibreuses de longueur moyenne comprise entre 0,5 et 25 centimètres, et un produit agglomérant représentant 1 % à 20 % de la masse de la couche isolante thermique, la couche isolante présentant une masse volumique est comprise entre 25 kg.m⁻³ et 100 kg.m⁻³.

La couche isolante peut également comporter les caractéristiques optionnelles suivantes considérées isolément ou selon toutes les combinaisons techniques possibles :
- La plante graminée est du miscanthus.
- Les fractions fibreuses ont un diamètre moyen compris entre 50 micromètres et 1 centimètre.
- La conductivité thermique de la couche isolante est comprise entre 0,039 et 0,045 W.m⁻¹.K⁻¹.
- Le produit agglomérant est d'origine végétale.

L'invention vise également un procédé de fabrication d'une couche isolante thermique en matériau végétal avec les caractéristiques de la revendication 5.

Le procédé peut également comporter les caractéristiques optionnelles suivantes considérées isolément ou selon toutes les combinaisons techniques possibles :
- Le procédé comprend une étape préalable de séchage des fractions fibreuses jusqu'à un taux d'humidité inférieure ou égal à 15 %.
- Le procédé comprend, préalablement à l'étape de mélange, une étape de préparation des fractions fibreuses comprenant les sous étapes successives de :
   - Broyage des tiges entières de la plante graminée ;
   - Tamisage des tiges broyées pour récupérer les fractions fibreuses de longueur moyenne comprise entre 0,5 et 25 centimètres ; et
   - Purification des fractions fibreuses tamisées pour éliminer les poussières et les feuilles de la plante graminée.

L'invention vise enfin un panneau de construction avec les caractéristiques de la revendication 8.

Le panneau de construction peut également comporter les caractéristiques optionnelles suivantes considérées isolément ou selon toutes les combinaisons techniques possibles :
- Le panneau de construction présente une résistance à la pression supérieure ou égale à 80 kg.m⁻².

D'autres caractéristiques et avantages de l'invention ressortiront clairement de la description qui en est donnée ci-dessous, à titre indicatif et nullement limitatif, en référence à la figure annexée :

[Fig 1] La figure 1 représente une vue schématique de fractions de tiges fibreuses de graminées utilisées pour former la couche isolante thermique de l'invention.

[Fig 2] La figure 2 représente une vue schématique en coupe transversale d'une partie d'une machine de fabrication d'une couche isolante thermique selon l'invention.

Il est tout d'abord précisé que sur les figures, les mêmes références désignent les mêmes éléments quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

Il est également précisé que les figures représentent essentiellement un mode de réalisation de l'objet de l'invention mais qu'il peut exister d'autres modes de réalisation qui répondent à la définition de l'invention, dans les limites des revendications ci-jointes.

L'invention concerne une couche isolante thermique réalisée selon un procédé qui sera décrit ci-après, à base d'un matériau végétal constitué des tiges **de** miscanthus. Le miscanthus est une plante herbacée vivace, aussi appelée « herbe à éléphant », « Eulalie » ou « roseau de Chine ». Ce type de couche isolante est adaptée au domaine du bâtiment, et en particulier pour les panneaux de construction préfabriqués.

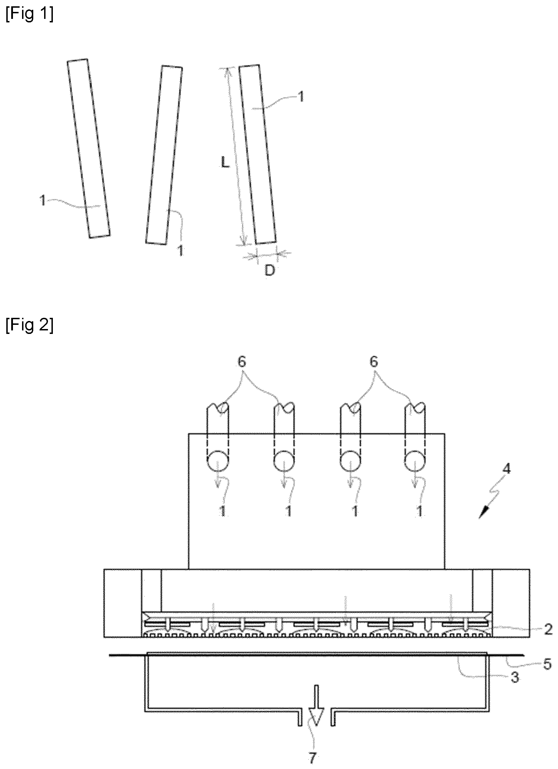

Selon l'invention et en référence à la figure 1, les tiges de miscanthus de la couche isolante se présentent sous forme de morceaux qui seront appelés dans la suite fractions de tiges fibreuses 1, lesquelles fractions de tiges fibreuses présentent une longueur moyenne L comprise entre 0,5 et 25 cm, et un diamètre moyen D compris entre 50 micromètres et 1 centimètre. De manière générale, le diamètre moyen D des fractions de tiges fibreuses 1 est inférieur d'un facteur 1 à 200 à la longueur moyenne L des fractions de tiges fibreuses 1, ce qui facilite la fabrication de la couche isolante et surtout assure une bonne intégrité structurelle de ladite couche. Typiquement, les fractions de tiges fibreuses 1 ont une forme d'aiguilles cylindriques.

L'expression « fractions de tiges fibreuses » utilisée dans la présente demande signifie que les tiges entières de miscanthus sont fractionnées pour former des morceaux de la tige de miscanthus dont les dimensions sont celles décrites dans le paragraphe précédent. Ces fractions de tiges fibreuses formées des morceaux de tige de miscanthus comprennent donc des fibres végétales - qui sont des expansions cellulaires filiformes, soit isolées soit sous forme de faisceaux - ainsi que les autres éléments constitutifs de la tige, notamment la moelle, l'écorce et l'épiderme de la tige. Cette expression regroupe donc toutes les fractions susceptibles d'être extraites à partir des tiges de miscanthus et qui comprennent des fibres végétales.

La masse volumique de la couche isolante est comprise entre 25 et 120 kg.m⁻³, préférentiellement entre 25 et 100 kg.m⁻³. En outre, l'épaisseur de la couche isolante est comprise entre 4,5 et 25 centimètres. Ces caractéristiques de la couche isolante assurent une faible conductivité thermique (appelée lambda), typiquement comprise entre 0,039 et 0,045 W.m⁻¹.K⁻¹ soit entre 39 et 45 mW.m⁻¹.K⁻¹. Cette conductivité thermique est comparable à celle des matériaux synthétiques connus pour leur performance en termes d'isolation thermique. Le tableau ci-dessous présente des résultats de mesures de conductivité thermique sur des couches isolantes selon l'invention, en fonction du pourcentage de miscanthus présent dans la couche, de l'épaisseur de la couche et de sa masse volumique. Ce tableau de résultats démontre bien que la couche isolante de l'invention est parfaitement adaptée à une utilisation dans le domaine de la construction.

| % Miscanthus | % Liant | Epaisseur (mm) | Masse volumique (kg.m⁻³) | Lambda (mW.m⁻¹.K⁻¹) |
|---|---|---|---|---|
| 80 | 20 | 47,7 | 83 | 41 |
| 85 | 15 | 45 | 115 | 43 |
| 80 | 20 | 75 | 103 | 45 |
| 80 | 20 | 83,3 | 76 | 45 |

Pour assurer la cohésion de la couche isolante, cette dernière comprend un produit agglomérant, pouvant être d'origine synthétique mais préférentiellement d'origine végétale. Le produit agglomérant représente 1 à 20 % de la masse totale de la couche isolante. Cette fourchette assure un excellent compromis entre les performances d'isolation thermique et l'intégrité structurelle de la couche isolante.

En effet, la couche isolante de l'invention est particulièrement adaptée pour la fabrication de panneaux préfabriqués, du type comprenant une couche en béton ou bien du type panneau sandwich comprenant deux couches en béton et un cœur isolant thermique selon l'invention. Un panneau de forme rectangulaire, présentant une largeur de l'ordre de 3 mètres et une épaisseur comprise entre 7 et 18 centimètres, présente une résistance à la pression supérieure ou égale à 80 kg.m⁻², c'est-à-dire que sous une contrainte de déformation de 80 kg.m⁻², le panneau se déforme en flexion de moins de 1% par rapport à sa forme d'origine. Encore une fois, un tel panneau de construction comprenant une couche isolante thermique selon l'invention est parfaitement adapté au domaine de la construction de bâtiments.

Les caractéristiques de la couche isolante à base de fractions de tiges fibreuses de miscanthus 1 seront mieux comprises à travers la description du procédé de fabrication de cette couche isolante avec une machine de fabrication 4 de ladite couche isolante.

Avant la mise en œuvre du procédé de l'invention, la matière première est récupérée. Cette matière première est du miscanthus stocké après récolte dans des hangars à l'abri de l'humidité. Le miscanthus est stocké sous forme ensilé en vrac ou sous forme compressée en balle. Afin d'éviter le développement indésirable de microorganismes et de moisissures, le miscanthus stocké présente un taux d'humidité inférieur ou égal à 15 %. Si ce taux d'humidité est supérieur à 15 %, le procédé comprend une étape préalable de séchage du miscanthus stocké en vrac ou sous forme de balle.

Au cours de la seconde étape du procédé, le miscanthus en vrac ou en balle est préparé, c'est-à-dire que les tiges de miscanthus sont fractionnées, c'est-à-dire détaillées en morceaux. Ce fractionnement du miscanthus en fractions de tiges fibreuses 1 utilisables pour réaliser la couche isolante thermique comprend les sous-étapes suivantes.

Au cours de la première sous étape, le miscanthus stocké est broyé, soit avec des broyeurs à balles entières si le miscanthus est stocké sous forme de balles, soit avec des broyeurs à couteaux ou à marteaux si le miscanthus est stocké en vrac sous forme ensilée. Le but de cette sous étape de broyage est de maitriser la granulométrie - c'est à dire la taille - des fractions de tiges fibreuses de miscanthus mais également de réduire le taux de surfaces lisses sur les fractions de tiges fibreuses pour faciliter l'adhésion sur lesdites fractions de tiges fibreuses 1 du produit agglomérant.

Au cours de la deuxième sous-étape, le miscanthus broyé est tamisé afin d'homogénéiser la taille des fractions de tiges fibreuses de miscanthus 1 selon la longueur L et le diamètre D moyens indiqués ci-dessus.

Au cours de la troisième sous-étape, le miscanthus tamisé est purifié pour supprimer les feuilles et les poussières, par exemple à l'aide d'un système de dépoussiérage et d'un système de séparation des feuilles.

A l'issu de cette seconde étape, le miscanthus se présente alors sous forme de fractions de tiges fibreuses 1 en forme d'aiguilles avec les caractéristiques voulues pour réaliser la couche isolante thermique selon l'invention.

Au cours de la troisième étape du procédé, les fractions de tiges fibreuses 1 préparées sont mélangées avec un produit agglomérant par pulvérisation ou imprégnation, préférentiellement un agglomérant végétal biosourcé comme par exemple l'acide polylactique, pour former un mélange 2. Alternativement, un agglomérant synthétique à base de pétrole est utilisé, par exemple du polyester ou du polytéréphtalate d'éthylène (PET). Ce mélange 2 est réalisé par une mélangeuse dans les proportions indiquées ci-dessus, laquelle mélangeuse est reliée en entrée à une pluralité de pré-ouvreuses 6 comprenant chacune un réservoir de fractions de tiges fibreuses préparées 1 d'une granulométrie définie. Ainsi, en fonction de la taille moyenne désirée de fractions de tiges fibreuses 1, ou en fonction de l'homogénéité désirée de la granulométrie des fractions de tiges fibreuses 1, ces dernières proviennent d'une seule ou plusieurs pré-ouvreuses 6 préalablement définies.

Le procédé met ensuite en œuvre des étapes pour former un voile 3 de fractions de tiges fibreuses 1 de miscanthus. Un tel voile 3 résulte de la mise en forme et du compactage du mélange 2 de fractions de tiges fibreuses 1 et de produit agglomérant, et présente déjà les dimensions et la masse volumique finales de la couche isolante thermique de l'invention.

Préférentiellement, une méthode dite Airlaid est utilisée pour obtenir ce voile de fractions de tiges fibreuses 3, laquelle méthode est décrite ci-après par les quatrième et cinquième étapes du procédé de l'invention.

Au cours de la quatrième étape, le mélange de fractions de tiges fibreuses 1 est transporté par un flux d'air et déposé sur une face d'un tablier transporteur perforé 5.

Puis, au cours de la cinquième étape, une dépression 7 est appliquée sous le tablier transporteur 5, c'est-à-dire au niveau de sa face opposée, pour compacter le mélange de fractions de tiges fibreuses 2 et former le voile de fractions de tiges fibreuses 3.

Une autre méthode de formation du voile de fractions de tiges fibreuses 3 peut être utilisée sans sortir du cadre de l'invention. En particulier, via une méthode dite par cardage-nappage, le mélange de fractions de tiges fibreuses 2 transite par des tambours hérissés de dents métalliques qui peignent et parallélisent les fractions de tiges fibreuses de miscanthus 1 et les déposent sur un tapis sous forme d'une nappe de fractions de tiges fibreuses. Plusieurs nappes sont ainsi superposées pour former le voile de fractions de tiges fibreuses 3.

Au cours de la sixième et dernière étape du procédé, le voile de fractions de tiges fibreuses 3 est consolidé par séchage du produit agglomérant, par exemple par thermo-fixation infrarouge, ce qui a pour effet de polymériser le produit agglomérant.

La couche isolante thermique ainsi obtenue peut être conditionnée sous forme de panneau ou de rouleau puis emballée pour son utilisation ultérieure, notamment pour fournir la couche isolante de panneaux de construction du type panneaux sandwich.

## Revendications

1. Couche isolante thermique réalisé à base de matériau végétal pour un panneau de construction de bâtiment, lequel matériau végétal est constitué de tiges de miscanthus sous forme de fractions de tiges fibreuses (1) de longueur moyenne (L) comprise entre 0,5 et 25 centimètres, la couche isolante thermique comprenant en outre un produit agglomérant représentant 1% à 20% de la masse de ladite couche isolante thermique, la couche isolante présentant une masse volumique est comprise entre 25 kg.m⁻³ et 100 kg.m⁻³.

2. Couche isolante selon la revendication précédente, **caractérisé en ce que** les fractions de tiges fibreuses (1) ont un diamètre moyen (D) compris entre 50 micromètres et 1 centimètre.

3. Couche isolante selon la revendication 1 ou 2, **caractérisée en ce que** sa conductivité thermique est comprise entre 0,039 et 0,045 W.m⁻¹.K⁻¹.

4. Couche isolante selon l'une quelconque des revendications précédentes, **caractérisée en ce que** le produit agglomérant est d'origine végétale.

5. Procédé de fabrication d'une couche isolante thermique en matériau végétal pour un panneau de construction de bâtiment, comprenant les étapes successives de :
• Mélange constitué de tiges de miscanthus sous forme de fractions de tiges fibreuses (1) de longueur moyenne (L) comprise entre 0,5 et 25 centimètres, et d'un produit agglomérant représentant 1% à 20% de la masse totale du mélange (2),
• Transport et dépôt du mélange (2) sur une face d'un tablier transporteur perforé (5),
• Compactage du mélange (2) par la génération d'une dépression (7) au niveau de la face opposée du tablier transporteur (5) pour former un voile de fractions de tiges fibreuses (3), et
• Séchage du produit agglomérant pour consolider le voile de fractions de tiges fibreuses (3) et former la couche isolante thermique présentant une masse volumique est comprise entre 25 kg.m⁻³ et 100 kg.m⁻³.

6. Procédé selon la revendication précédente, **caractérisé en ce qu'**il comprend une étape préalable de séchage des fractions de tiges fibreuses (1) jusqu'à un taux d'humidité inférieure ou égal à 15 %.

7. Procédé selon la revendication 5 ou 6, **caractérisé en ce qu'**il comprend, préalablement à l'étape de mélange, une étape de préparation des fractions de tiges fibreuses (1) comprenant les sous étapes successives de :
• Broyage des tiges entières de miscanthus ;
• Tamisage des tiges broyées pour récupérer les fractions de tiges fibreuses (1) de longueur moyenne (L) comprise entre 0,5 et 25 centimètres, et
• Purification des fractions de tiges fibreuses (1) tamisées pour éliminer les poussières et les feuilles de miscanthus.

8. Panneau de construction pour un bâtiment comprenant au moins une couche en béton et une couche isolante thermique à base de matériau végétal solidaire de la couche en béton, lequel matériau végétal est constitué de tiges de miscanthus sous forme de fractions de tiges fibreuses (1) de longueur moyenne (L) comprise entre 0,5 et 25 centimètres, la couche isolante thermique comprenant en outre un produit agglomérant représentant 1% à 20% de la masse de ladite couche isolante thermique, la couche isolante thermique présentant une masse volumique est comprise entre 25 kg.m⁻³ et 100 kg.m⁻³.

9. Panneau de construction selon la revendication précédente, **caractérisé en ce qu'**il présente une résistance à la pression supérieure ou égale à 80 kg.m⁻².

## Patentansprüche

1. Wärmedämmschicht auf der Basis von pflanzlichem Material für eine Bauplatte, wobei das pflanzliche Material aus Miscanthus-Stängeln in Form von faserigen Stängelabschnitten (1) mit einer durchschnittlichen Länge (L) zwischen 0,5 und 25 Zentimetern besteht, wobei die Wärmedämmschicht ferner ein Bindemittel enthält, das 1 % bis 20 % der Masse der genannten Wärmedämmschicht ausmacht, und die Wärmedämmschicht eine Dichte zwischen 25 kg.m⁻³ und 100 kg.m⁻³ aufweist.

2. Wärmedämmschicht nach dem vorstehenden Anspruch, **dadurch gekennzeichnet, dass** die Faserabschnitte (1) einen mittleren Durchmesser (D) zwischen 50 Mikrometern und 1 Zentimeter aufweisen.

3. Wärmedämmschicht nach Anspruch 1 oder 2, **dadurch gekennzeichnet, dass** ihre Wärmeleitfähigkeit zwischen 0,039 und 0,045 W.m⁻¹.K⁻¹ liegt.

4. Isolierschicht nach einem der vorstehenden Ansprüche, **dadurch gekennzeichnet, dass** das Bindemittel pflanzlichen Ursprungs ist.

5. Verfahren zur Herstellung einer Wärmedämmschicht aus pflanzlichem Material für eine Bauplatte, umfassend die aufeinanderfolgenden Schritte:
• Mischung aus Miscanthus-Stängeln in Form von faserigen Stängelstücken (1) mit einer durchschnittlichen Länge (L) zwischen 0,5 und 25 Zentimetern und einem Bindemittel, das 1 % bis 20 % der Gesamtmasse der Mischung (2) ausmacht,
• Transport und Aufbringen der Mischung (2) auf eine Seite einer perforierten Förderplatte (5),
• Verdichtung der Mischung (2) durch Erzeugung eines Unterdrucks (7) auf der gegenüberliegenden Seite des Förderbandes (5), um einen Vlies aus faserigen Stängelanteilen (3) zu bilden, und
• Trocknen des Bindemittels, um den Schleier aus Faserhalmfraktionen (3) zu verfestigen und die Wärmedämmschicht mit einer Dichte zwischen 25 kg.m⁻³ und 100 kg.m⁻³ zu bilden.

6. Verfahren nach dem vorstehenden Anspruch, **dadurch gekennzeichnet, dass** es einen vorbereitenden Schritt zum Trocknen der Faserhalmfraktionen (1) auf einen Feuchtigkeitsgehalt von höchstens 15 % umfasst.

7. Verfahren nach Anspruch 5 oder 6, **dadurch gekennzeichnet, dass** es vor dem Mischschritt einen Schritt zur Aufbereitung der Faserstammfraktionen (1) umfasst, der die folgenden aufeinanderfolgenden Teilschritte umfasst:
• Zerkleinern der ganzen Miscanthus-Stängel;
• Sieben der zerkleinerten Stängel, um die Faser-Stängel-Fraktionen (1) mit einer durchschnittlichen Länge (L) zwischen 0,5 und 25 Zentimetern zu gewinnen, und
• Reinigung der gesiebten Faserhalmfraktionen (1) zur Entfernung von Staub und Miscanthus-Blättern.

8. Bauplatte für ein Gebäude, umfassend mindestens eine Betonschicht und eine mit der Betonschicht verbundene Wärmedämmschicht auf der Basis von pflanzlichem Material, wobei das pflanzliche Material aus Miscanthus-Stängeln in Form von faserigen Stängelstücken (1) mit einer durchschnittlichen Länge (L) zwischen 0,5 und 25 Zentimetern besteht, wobei die Wärmedämmschicht ferner ein Bindemittel enthält, das 1 % bis 20 % der Masse der genannten Wärmedämmschicht ausmacht, und die Wärmedämmschicht eine Dichte zwischen 25 kg.m⁻³ und 100 kg.m⁻³ aufweist.

9. Bauplatte nach dem vorstehenden Anspruch, **dadurch gekennzeichnet, dass** sie eine Druckfestigkeit von mindestens 80 kg.m⁻² aufweist.

## Claims

1. A thermal insulation layer made from plant-based material for a building construction panel, wherein the plant-based material consists of miscanthus stalks in the form of fibrous stalk fragments (1) with an average length (L) of between 0.5 and 25 centimeters, the thermal insulation layer further comprising a binder representing 1 % to 20 % of the mass of said thermal insulation layer, the insulation layer having a density of between 25 kg.m⁻³ and 100 kg.m⁻³.

2. An insulating layer according to the preceding claim, **characterized in that** the fibrous strands (1) have an average diameter (D) of between 50 micrometers and 1 centimeter.

3. An insulating layer according to claim 1 or 2, **characterized in that** its thermal conductivity is between 0.039 and 0.045 W.m⁻¹.K⁻¹.

4. An insulating layer according to any one of the preceding claims, **characterized in that** the binder is of plant origin.

5. A method for manufacturing a thermal insulating layer made of plant-based material for a building construction panel, comprising the successive steps of:
• A mixture consisting of miscanthus stalks in the form of fibrous stalk fractions (1) with an average length (L) of between 0.5 and 25 centimeters, and a binder representing 1 % to 20 % of the total mass of the mixture (2),
• Conveying and depositing the mixture (2) onto one side of a perforated conveyor belt (5),
• Compacting the mixture (2) by creating a vacuum (7) on the opposite side of the conveyor belt (5) to form a mat of fibrous stalk fractions (3), and
• Drying the binder to consolidate the web of fibrous stalk fractions (3) and form the thermal insulation layer having a density of between 25 kg·m⁻³ and 100 kg·m⁻³.

6. A method according to the preceding claim, **characterized in that** it comprises a preliminary step of drying the fibre stalk fractions (1) to a moisture content of 15 % or less.

7. A method according to claim 5 or 6, **characterized in that** it comprises, prior to the mixing step, a step for preparing the fibrous stalk fractions (1) comprising the successive sub-steps of:
• Grinding the whole Miscanthus stalks;
• Sieving the crushed stalks to recover the fibrous stalk fractions (1) with an average length (L) of between 0.5 and 25 centimeters, and
• Purifying the sieved fibrous stalk fractions (1) to remove dust and Miscanthus leaves.

8. A building panel for a building comprising at least one concrete layer and a thermal insulation layer based on plant material integral with the concrete layer, the plant material consisting of miscanthus stalks in the form of fibrous stalk fragments (1) with an average length (L) of between 0.5 and 25 centimeters, the thermal insulation layer further comprising a binder representing 1 % to 20 % of the mass of said thermal insulation layer, the thermal insulation layer having a density of between 25 kg.m⁻³ and 100 kg.m⁻³.

9. A building panel according to the preceding claim, **characterized in that** it has a compressive strength of 80 kg.m⁻².
